# DEMANDE DE BREVET EUROPEEN

(11) **EP 0 755 644 A1**
(43) Date de publication de la demande: **29.01.1997**
(21) Numéro de dépôt: 96401691.9
(22) Date de dépôt: 29.07.1996
(51) Int. Cl.: A47G 23/04, F25D 3/08, C02F 1/48

(54) **Récipient isotherme ou rafraichisseur pour traitement magnétique d'un liquide alimentaire**

(30) Priorité: 28.07.1995 FR 9509215
(71) Demandeur: Thoraval, Gilles, F-36260 Reuilly (FR)
(72) Inventeur: Thoraval, Gilles, F-36260 Reuilly (FR)
(74) Mandataire: Bruder, Michel

(57) **Abrégé**

La présente invention concerne un récipient pour soumettre à l'action d'un champ magnétique un liquide alimentaire contenu dans son emballage d'origine (1) caractérisé en ce qu'il se présente sous la forme d'un seau à paroi latérale double (2) comportant une paroi interne (2a) et une paroi externe (2b) délimitant entre elles un espace annulaire (5), la paroi interne (2a) du seau présente une section transversale sensiblement identique à celle de l'emballage (1) du liquide alimentaire, et elle porte, dans l'espace annulaire (5), au moins une paire d'aimants (6) diamétralement opposés, et le reste de l'espace annulaire (5) qui est dépourvu d'aimants (6), contient totalement ou partiellement un isolant thermique ou un élément générateur de froid.

## Description

La présente invention concerne un récipient pour soumettre à l'action d'un champ magnétique un liquide alimentaire.

Il est connu depuis longtemps que le traitement, par un champ magnétique, d'un liquide alimentaire tel que par exemple l'eau, les jus de fruits, le lait, etc..., entraîne des réactions dynamiques sur les différents composants de l'eau qui eux-mêmes permettent des effets dynamiques sur l'organisme, en entraînant une meilleure assimilation, une meilleure digestion et une meilleure élimination.

L'invention a pour but de fournir un récipient permettant de traiter magnétiquement le liquide alimentaire au sein même de son emballage d'origine et de maintenir le liquide alimentaire dans un état de fraîcheur rendant sa consommation plus agréable.

A cet effet, ce récipient pour soumettre à l'action d'un champ magnétique un liquide alimentaire contenu dans son emballage d'origine est *caractérisé* en ce qu'il se présente sous la forme d'un seau à paroi latérale double comportant une paroi interne et une paroi externe délimitant entre elles un espace annulaire, la paroi interne du seau présente une section transversale sensiblement identique à celle de l'emballage du liquide alimentaire, et elle porte, dans l'espace annulaire, au moins une paire d'aimants diamétralement opposés, et le reste de l'espace annulaire qui est dépourvu d'aimants, contient totalement ou partiellement un isolant thermique ou un élément générateur de froid.

Le récipient suivant l'invention est avantageusement réalisé en matière plastique, en deux pièces moulées séparemment rendues ensuite solidaires l'une de l'autre par soudage ou collage, ou bien encore laissées amovibles.

Pour assurer l'isolation thermique, l'espace annulaire dépourvu des aimants peut être rempli d'air, mis sous vide, ou encore il peut contenir une mousse de matière plastique. Dans le cas où cet espace annulaire contient un élément générateur de froid, cet élément peut être constitué par des glaçons formés dans un congélateur et introduits ensuite par un orifice approprié prévu dans la paroi externe du récipient, par de l'eau contenue dans des compartiments séparés, par des éléments générateurs de froid raccordés à un circuit frigorifique externe, etc ...

On décrira ci-après, à titre d'exemples non limitatifs, diverses formes d'exécution de la présente invention en référence au dessin annexé sur lequel :
- La figure 1 est une vue en coupe axiale d'un récipient en forme de seau suivant l'invention.
- La figure 2 est une vue en coupe transversale faite suivant la ligne II-II de la figure 1.
- La figure 3 est une vue en coupe axiale faite suivant la ligne III-III de la figure 2.

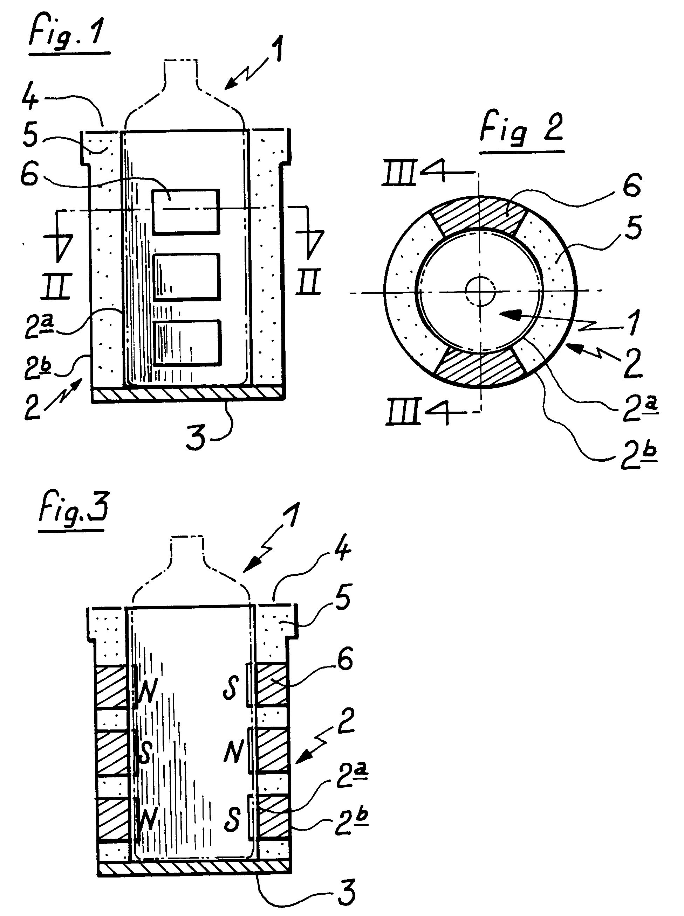

Le récipient suivant l'invention qui est représenté sur les figures 1 à 3, est destiné à soumettre à l'action d'un champ magnétique un liquide alimentaire contenu dans son emballage d'origine. Cet emballage est représenté schématiquement sur les figures 1 et 3 par une bouteille cylindrique 1 indiquée en traits mixtes. Dans ce cas, le récipient suivant l'invention, en forme de seau, a une section transversale interne circulaire, correspondant sensiblement à celle de la bouteille 1 qu'il doit recevoir. Toutefois, le récipient suivant l'invention pourrait avoir une section transversale interne carrée ou rectangulaire, par exemple dans le cas où il est destiné à recevoir des emballages prismatiques ayant des sections transversales correspondantes.

Le récipient en forme de seau suivant l'invention comporte une paroi transversale double 2 obturée, à son extrémité inférieure, par un fond 3 et délimitant, à son extrémité supérieure, une ouverture 4 à travers laquelle peut être introduit l'emballage contenant le liquide alimentaire à traiter. La paroi latérale double 2 comprend une paroi interne 2a et une paroi externe 2b qui délimitent entre elles un espace annulaire 5. Dans cet espace annulaire 5 sont logés des aimants permanents 6 qui sont répartis par paires d'aimants diamétralement opposés, superposés, situés dans des plans transversaux différents. Les polarités des aimants 6 peuvent être quelconques et sont choisies en fonction des champs magnétiques que l'on désire créer dans le liquide alimentaire contenu dans son emballage 1. Notamment, les faces internes des aimants permanents superposés 6 peuvent présenter des polarités qui sont soit les mêmes, c'est-à-dire Nord-Nord-Nord d'un côté du récipient, et Sud-Sud-Sud de l'autre côté du récipient, ou bien encore, elles peuvent alterner en étant d'un côté Nord-Sud-Nord et de l'autre côté Sud-Nord-Sud. N'importe quelle combinaison de ces polarités peut se révéler souhaitable.

Les aimants permanents 6 sont portés par la paroi interne 2a à laquelle ils sont fixés en étant répartis de la manière appropriée, à la fois dans le sens circonférentiel et dans le sens longitudinal. La paroi interne 2a peut porter une seule paire d'aimants diamétralement opposés, dans chaque plan transversal, comme il est représenté sur le dessin, ou elle peut aussi comporter un nombre pair quelconque d'aimants 6 répartis régulièrement autour de l'axe longitudinal du récipient.

Par ailleurs, le reste de l'espace annulaire 5 où ne se trouvent pas les aimants 6, contient un élément d'isolation thermique ou frigorigène. L'élément d'isolation thermique peut être un volume d'air, une couche de matière isolante telle qu'une mousse plastique, ou bien encore le vide créé dans l'espace annulaire 5. L'élément frigorigène peut être constitué par de l'eau congelée in situ dans des poches déformables, par des glaçons formés dans un congélateur et introduits dans l'espace annulaire 5 à travers un ou plusieurs orifices appropriés prévus dans la paroi externe 2b, etc ...

Le récipient en forme de seau suivant l'invention peut être avantageusement réalisé en deux parties indépendantes qui peuvent être laissées amovibles, pour permettre l'introduction d'un élément frigorigène ou bien qui sont fixées ensuite l'une à l'autre. L'une des parties ou partie externe comprend la paroi externe 2b et le fond 3 et l'autre partie comprend la paroi interne 2a à laquelle sont fixés les aimants opposés diamétralement et superposés longitudinalement. Les deux parties du récipient sont emboîtées l'une dans l'autre et fixées ensuite l'une à l'autre par soudage ou collage.

Le récipient suivant l'invention permet de fournir au consommateur du liquide alimentaire un produit dont les caractéristiques auront été améliorées par l'action du champ magnétique et dont la température aura été maintenue assez basse pour permettre de le boire dans les meilleures conditions, et surtout de le traiter pendant un temps suffisamment long sans risquer pour autant une dégradation ou un dépérissement du liquide.

Enfin le récipient selon l'invention peut sans adaptation particulière être utilisé pour recevoir directement le liquide alimentaire à traiter, dans son emballage d'origine ; en variante, ledit récipient peut d'ailleurs être muni d'un couvercle de fermeture protégeant le liquide pendant la durée du traitement magnétique.

## Revendications

1. Récipient pour soumettre à l'action d'un champ magnétique un liquide alimentaire contenu, ou non, dans son emballage d'origine (1) ayant la forme d'un seau à paroi latérale double (2) comportant une paroi interne (2a) et une paroi externe (2b) délimitant entre elles un espace annulaire (5), la paroi interne (2a) du seau présente une section transversale sensiblement identique à celle de l'emballage (1) du liquide alimentaire, *caractérisé en* ce que dans l'espace annulaire (5), on dispose au moins une paire d'aimants (6) diamétralement opposés, et on complète le reste de l'espace annulaire (5) qui est dépourvu d'aimants (6), totalement ou partiellement avec un élément générateur de froid.

2. Récipient selon la revendication précédente *caractérisé* en ce qu'il est réalisé en deux parties indépendantes emboîtées l'une dans l'autre, l'une des parties ou partie externe comprenant la paroi externe (2b) et le fond (3) et l'autre partie comprenant la paroi interne (2a) à laquelle sont fixés les aimants (6) opposés diamétralement et superposés longitudinalement.

3. Récipient selon l'une des revendications 1 ou 2 *caractérisé* en ce que ses deux parties (2b,3;2a) sont amovibles.

4. Récipient selon l'une des revendications 1 ou 2 *caractérisé* en ce que ses deux parties (2b,3;2a) sont fixées l'une à l'autre par soudage ou collage.

5. Récipient selon l'une des revendications 1 à 4 *caractérisé* en ce que la paroi interne (2a) porte plusieurs paires d'aimants (6) diamétralement opposés situés dans un même plan transversal.

6. Récipient selon l'une des revendications 1 à 5 *caractérisé* en ce que la paroi interne (2a) porte plusieurs paires d'aimants (6) diamétralement opposés situés dans des plans transversaux différents.
